# EUROPEAN PATENT APPLICATION

(11) **EP 2 987 660 A1**
(43) Date of publication of application: **24.02.2016**
(21) Application number: 15180160.2
(22) Date of filing: 07.08.2015
(51) Int. Cl.: B60C 23/12, B29D 30/00

(54) **METHOD OF ADHESION OF RIGID COMPONENTS TO A TIRE**

(30) Priority: 21.08.2014 US 201414464825
(71) Applicant: The Goodyear Tire & Rubber Company, Akron, Ohio 44316 (US)
(72) Inventor: CHANDRA, Dinesh, Stow, OH Ohio 44224 (US); WELTER, Carolin Anna, 54340 Schleich (DE); LIN, Cheng-Hsiung, Hudson, OH Ohio 44236 (US); BENEDICT, Robert Leon, Tallmadge, OH Ohio 44278 (US)
(74) Representative: Kutsch, Bernd

(57) **Abstract**

The invention provides a method of mounting a device to a tire (12) comprising the following steps: A method of mounting a device to a tire, the method comprising the following steps: buffing an inside surface of the tire (12); forming a rubber layer and a rubber extension on a mounting surface (216) of the device, wherein the rubber extension extends past a support frame (212); applying rubber cement to the mounting surface (216) and then affixing the mounting surface of the device to the inside surface; and then curing the rubber cement. Also, a tire and pump assembly is disclosed comprising a tire (12), a pump passageway (42) enclosed within a bending region of the tire (12) and a regulator device in fluid communication with the pump passageway (42). The regulator device is operative to regulate the fluid from outside of the tire (12) into the pump passageway (42) and comprises an air inlet port assembly comprising a regulator assembly. The regulator device has a support frame (212) and a mounting surface (216). The mounting surface (216) is coated with rubber forming a rubber flange (213). The rubber flange (213) extends past the support frame (212). The mounting surface (216) is adhered to the innerliner surface with an adhesive.

## Description

### Field of the Invention

The invention relates generally to tires and more specifically, to adhering mechanical components to a tire.

### Background of the Invention

It is often desirable to incorporate devices into tires, such as for example, an air maintenance feature within a tire that will maintain correct air pressure within the tire, or a device for monitoring tire parameters such as a tire pressure monitor system. An air maintenance feature typically includes rigid mechanical components such as an air filter, regulator or valve mechanism. These mechanical components must be secured to the tire, and be able to sustain rotational and centrifugal forces. These devices must also be assembled in such a way to minimize the stresses at the bonding interfaces and allow for ease of assembly.

### Summary of the Invention

The invention relates to a tire and pump assemply in accordance with claim 1 and to methods in accordance with claim 4 or 5 respectively.

Dependent claims refer to preferred embodiments of the invention.

In one aspect of the invention, a method of mounting a device to a tire is disclosed comprising the following steps: buffing an inside surface of the tire, forming a rubber layer and a rubber extension on a mounting surface of the device, wherein the rubber extension extends past the support frame; applying rubber cement to the mounting surface and then affixing the mounting surface of the device to the inside surface; and then curing the rubber cement.

### Brief Description of the Drawings

The invention will be described by way of example and with reference to the accompanying drawings in which:
FIG. 1 is a front view of tire and rim assembly with a pump, valve and filter assembly;
FIG. 2 is a cross sectional view of a truck tire;
FIG. 3 is a close up view of the truck tire bead area showing a docking station, a regulator and a filter assembly for communicating with the pump passageway;
FIG. 4 is an exploded view of a regulator and docking station;
FIG. 5 is a perspective view from the below of a docking station and regulator of Fig. 4;
FIG. 6 is a perspective view of the docking station frame; and
FIG. 7 is a perspective view of the mold for forming the rubber flange.

### Detailed Description of Example Embodiments of the Invention

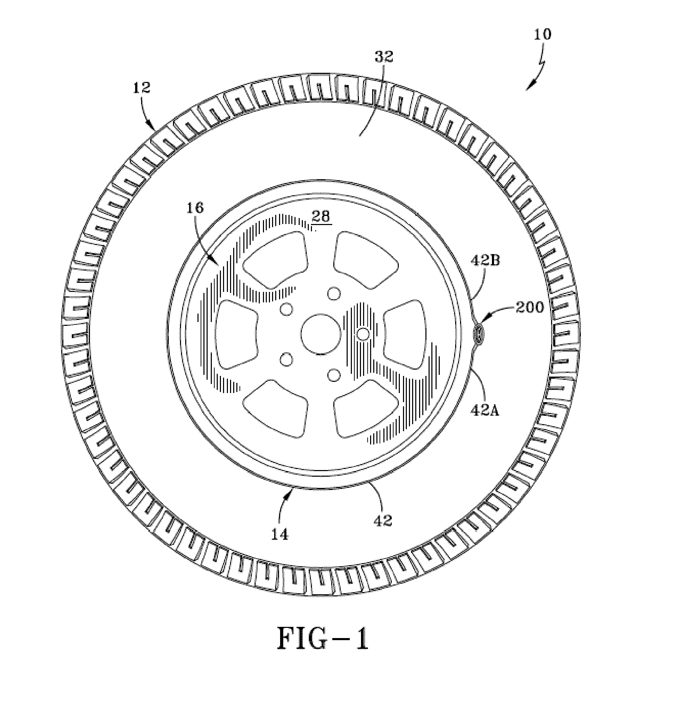

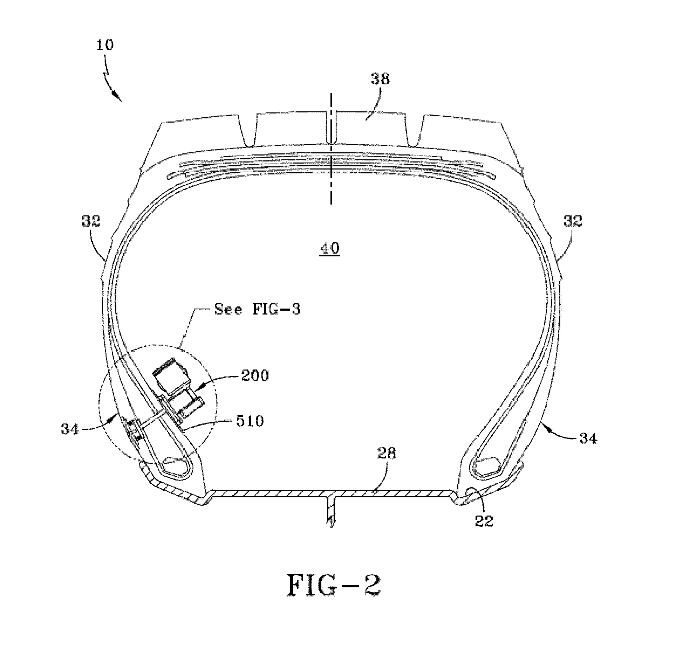

Referring to FIGS. 1 and 2, a tire assembly 10 includes a tire 12, a pump assembly 14, and a tire wheel 16. The tire mounts in a conventional fashion to a wheel having a rim body 28 with rim mounting surfaces 22. An annular rim body 28 joins the rim mounting surfaces 22 and supports the tire assembly as shown. The tire is of conventional construction, having a pair of sidewalls 32 extending from opposite bead areas 34 to a crown or tire tread region 38. The tire and rim 28 enclose an interior tire cavity 40 which is filled with air.

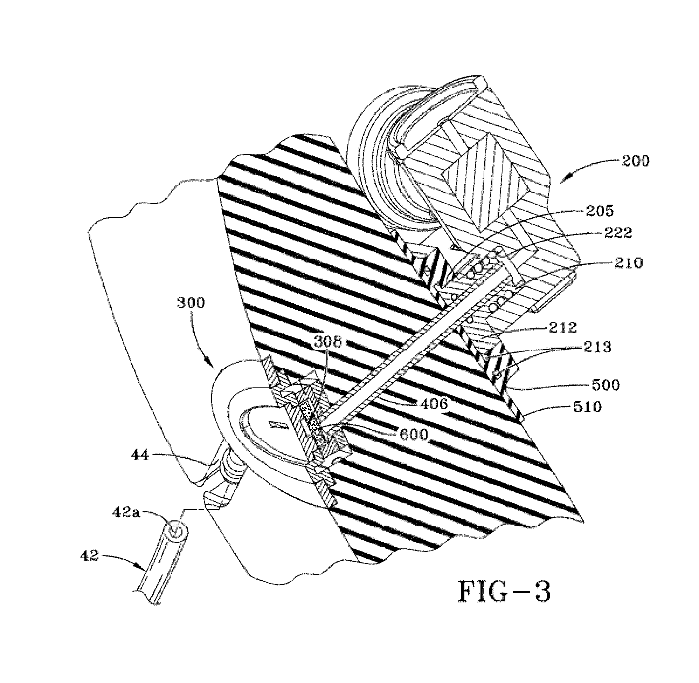

As shown in FIGS. 1 and 3, the tire assembly includes a pump 14 having a pump passageway 42 that is mounted or located in the tire in a channel 44, preferably near the bead region 34 of the sidewall. The pump passageway 42 may be formed of a discrete tube 42 made of a resilient, flexible material such as plastic, elastomer or rubber compounds, and is capable of withstanding repeated deformation cycles when the tube is deformed into a flattened condition subject to external force and, upon removal of such force, returns to an original condition. The tube is of a diameter sufficient to operatively pass a volume of air sufficient for the purposes described herein and allowing a positioning of the tube in an operable location within the tire assembly as will be described. Preferably, the tube has an elliptical cross-sectional shape, although other shapes such as round may be utilized.

The pump passageway itself may also be integrally formed or molded into the sidewall of the tire during vulcanization, eliminating the need for an inserted tube. An integrally formed pump passageway is preferably made by building into a selected green tire component such as a chafer, a removable strip made of wire or silicone. The component is built into the tire and cured. The removable strip is then removed post cure to form a molded in or integrally formed pump air passageway.

Hereinafter, the term "pump passageway" refers either to installed tubes or an integrally molded in passageway. The location selected for the pump passageway within the tire may be within a tire component residing within a high flex region of the tire, sufficient to progressively collapse the internal hollow air passageway as the tire rotates under load thereby conveying air along the air passageway from the inlet to the pump outlet.

The pump air passageway 42 has an inlet end 42a and an outlet end 42b in fluid communication with a regulator or valve assembly 200, as shown in Figure 3. The regulator assembly is preferably mounted inside the tire. Examples of pressure regulators or valve systems suitable for use with the invention are disclosed in US-A-2013/0048176, US-A-2013/0048177 and US-A-2013/0048178, which are hereby incorporated by reference. As shown in this particular example, the inlet end 42a and the outlet end 42b are spaced apart approximately 360 degrees forming an annular pump assembly. However, the inlet and outlet ends may be spaced apart 90 degrees, 180 degrees, etc.

An air filter assembly 300 is positioned on the outer sidewall of the tire, opposite the regulator assembly 200 and in the vicinity of the pump passageways, as shown in Figures 2-3. The air filter assembly filters the outside air and communicates the filtered air to the regulator assembly 200 via passage tube 406. One or more layers of filter media 600 is received in the internal cavity 308 of the filter assembly 300. The filter media may be a woven or nonwoven fiber, foam, spun fiberglass, charcoal, or other materials known to those skilled the art. Alternatively, a membrane such as PTFE GoreTex may be used, alone or in combination with the filter media.

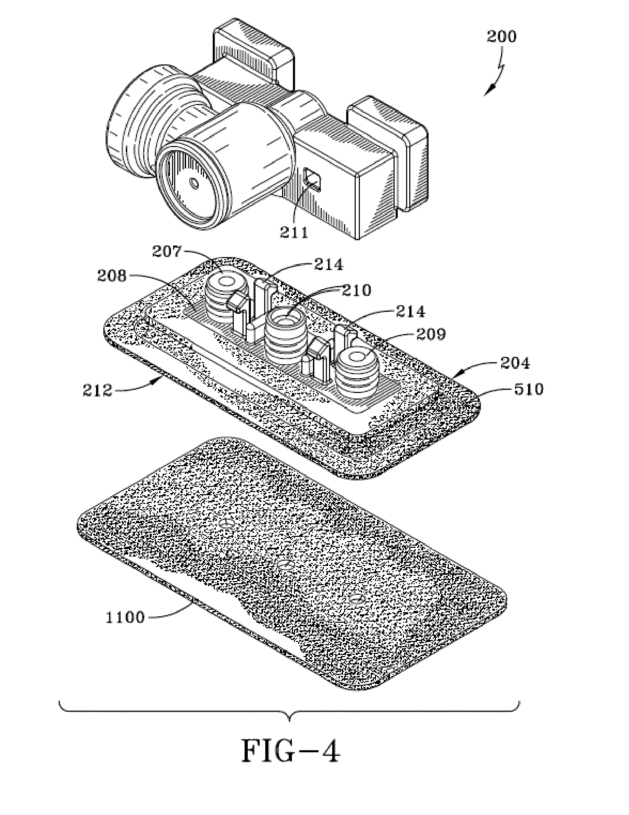

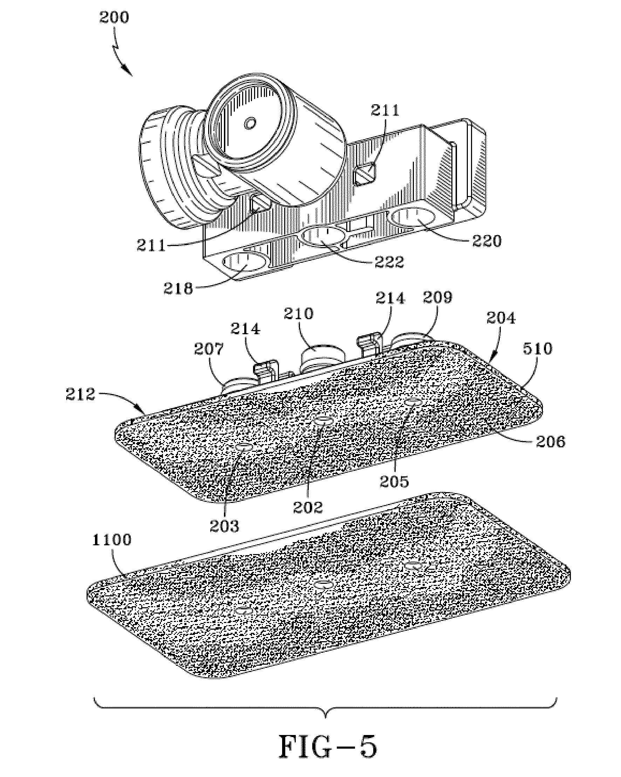

The regulator assembly 200 is shown in Figures 4 - 6. The regulator assembly 200 is operable to control the amount of inlet air to the pump system 42. If the tire cavity pressure falls below a set trigger pressure, the regulator assembly allows filtered air to enter the regulator assembly inlet port 222 through inlet hole 202, and then through to the pump passageway 42. The regulator assembly may allow airflow into the pump system through an air outlet port 210. The regulator assembly also may control the flow of air from the pump into the tire cavity, as well as prevent cavity air from back flowing into the pump passageways.

The regulator assembly 200 is preferably affixed to the inside of the tire, near the bead area. In this embodiment, the regulator assembly 200 is detachably mounted to a docking station 204. The docking station 204 has a lower surface 206 that is permanently affixed to the inside of the tire. The docking station 204 has an inlet port 202 that is in fluid communication with a central air conduit 210, opposite the inlet 202. The central air conduit extends from the upper surface 208 of the docking station to the inlet 202. The central air conduit 210 is in fluid communication with the air filter assembly 300, and communicates filtered air to the regulator assembly inlet 222 as shown in Figure 3.

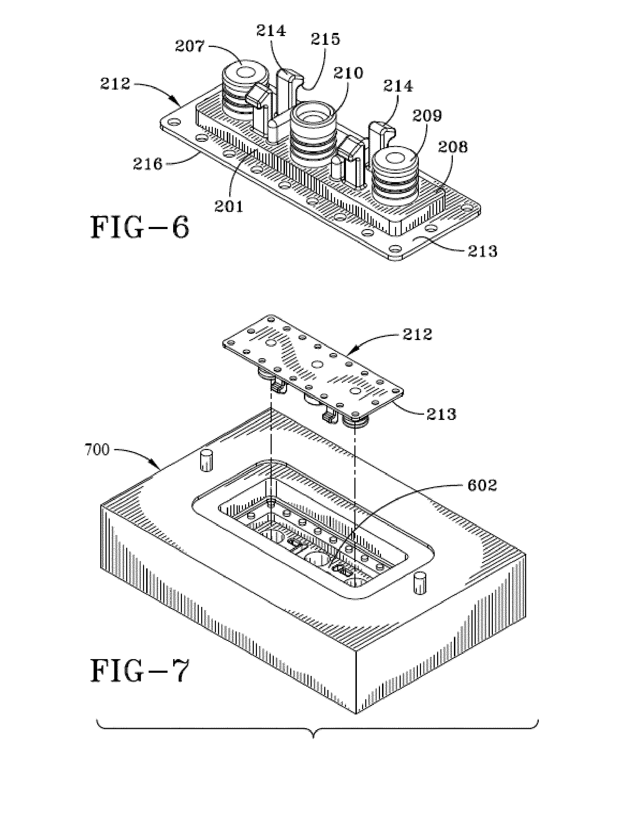

Figure 6 illustrates the docking station support frame 212 without the rubber encasement. The support frame 212 has an upper surface 208 that connects to the lower surface of the regulator. A plurality of pronged connectors 214 extend from the upper surface and have a tabbed portion 215 that snapped into receptacles 211 inside the regulator. The upper surface of the docking station has a regulator outlet conduit 207 which communicates fluid from the regulator outlet 218 to the pump inlet 42a. The upper surface of the docking station further includes a regulator inlet conduit 209 which communicates pump fluid from the pump outlet 42b to the regulator inlet 220. As shown in Figs. 3 and 4, the docking station has a rubber layer 500 molded over the support frame. As shown in Fig. 7, the cross-section of the support frame 212 preferably has a flanged surface 213 surrounding the support frame. The rubber layer is molded around the sides of the docking station and along the flanged surface 213 and along the bottom surface 216 of the support frame. As shown in Fig 4, the rubber layer has a rubber flange or extension 510 which extends outward the support frame. The rubber flange 510 extends past the flanged surface 213 1-3 cm on all sides. Thus the footprint of rubber layer is greater than the footprint of the support frame. The thickness of the rubber layer is in the range of 1-4 mm, preferably 2-3 mm.

The following steps are followed to mount the docking station 204 to the inside surface of the tire. These steps could also be used to mount any mechanical device, including the regulator without the docking station. The lower mounting surface 216 and sides 201 including the flanged surface 213 are buffed with abrasive material such as sandpaper. Next the mounting surface and sides of the docking station are pretreated with Chemlock or other suitable adhesive, ensuring the holes 202, 203, 205 located on the lower surface of the docking station are protected from the application of adhesive. Next, the docking station is placed in a mold 600, so that the upper surface 208 is seated against a lower surface 602 of the mold 600 as shown in figure 7. Green rubber or elastomer is placed in the mold to enrobe the lower mounting surface and sides of the docking station with rubber/elastomer and to form a rubber flange on the lower mounting surface. A wide variety of rubbers would work, such as sidewall compound, cushion gum, apex etc. The mold forms an extension or thin layer of rubber wherein the periphery of the rubber flange extends 2-3 cm outward of the mounting surface. Preferably, the thickness of the rubber is about 1 to 2 mm. The coating of rubber may be cured or partially cured about the docking station housing. The rubber lower mounting surface and sides, including the rubber flange is buffed.

Next, the inner liner surface of the tire is buffed. Depending upon the adhesion strength required, the inner tire surface may need to be buffed down to expose the better bondable material i.e. the ply-coat, removing the inner liner. A green rubber patch 1100 is used to secure the docking station to the tire inner liner surface. The docking station is affixed to the tire sidewall. The green rubber patch 1100 is preferably larger in size than the mounting surface of the docking station. The rubber patch 1100 is coated with a suitable adhesive on both sides and then inserted onto the inner surface of the tire. The patch 1100 may require holes that are aligned with holes of tire and the device to be mounted. One suitable adhesive is Fast Dry Self-vulcanizing Cement made by the Rubber Patch Company. The patch 1100 is then stitched. Next, the device mounting surface is mounted over the rubber patch 1100, ensuring the rubber patch holes are aligned with the device holes and any tire holes. The device is then clamped to the tire, and then allowed to cure at ambient temperature or with heat, depending upon the adhesive selected.

## Claims

1. A tire and pump assembly comprising:
a tire (12) having two spaced inextensible beads (34); a ground contacting tread portion (38); a pair of sidewalls (32) extending radially inward from the axial outer edges of said tread portion to join the respective beads; a supporting carcass for the tread portion and the sidewalls; an innerliner disposed radially inward of the carcass, the innerliner having a innerliner surface facing an interior cavity (40) of the tire (12);
a pump passageway (42) enclosed within a bending region of the tire (12), wherein the pump passageway (42) is operative to close and open segment by segment as a the bending region of the tire (12) passes through a rolling tire footprint to pump air along the air passageway (42);
a regulator device in fluid communication with the pump passageway (42), wherein the regulator device is operative to regulate the fluid from outside of the tire (12) into the pump passageway (42) and comprises an air inlet port assembly comprising a regulator assembly, the regulator device having a support frame (212) and a mounting surface (216), wherein the mounting surface (216) is coated with rubber forming a rubber flange (213), wherein the rubber flange (213) extends past the support frame (212), and wherein the mounting surface (216) is adhered to the innerliner surface with an adhesive.

2. The assembly of claim 1 wherein the rubber extension extends past the support frame of from 2 cm to 3 cm.

3. The assembly of claim 1 or 2 wherein the regulator device includes a docking station (204) and wherein the mounting surface (216) is located on the docking station (204).

4. A method of mounting a device to a tire, the method comprising the following steps:
a) buffing an inside surface of the tire (12);
b) forming a rubber layer and a rubber extension on a mounting surface (216) of the device, wherein the rubber extension extends past a support frame (212);
c) applying rubber cement to the mounting surface (216) and then affixing the mounting surface of the device to the inside surface; and then
d) curing the rubber cement.

5. A method of mounting a device to a tire, the method comprising the following steps:
a) buffing an inside surface of the tire (12);
b) coating a green rubber patch on both sides of the patch with rubber cement and inserting the coated green rubber patch onto the buffed inside surface of the tire;
c) molding the device with rubber and forming a rubber flange (213) about the device, wherein the rubber flange (213) extends past a support frame (212);
d) affixing a mounting surface (216) of the device to the coated green rubber patch; and
e) curing the tire (12).

6. The method of claim 4, wherein step c) comprises applying the rubber cement and a green rubber patch to the mounting surface (216) and then affixing the mounting surface of the device to the inside surface, and wherein step d) comprises curing the rubber patch and the cement.

7. The method of claim 5, wherein the rubber flange is formed such that the periphery of the rubber flange (213) extends past the support frame (212).

8. The method of claim 7 wherein the rubber flange (213) is formed such that the periphery of the rubber flange extends past the support frame (212) in the range of from 2 cm to 3 cm in all directions.

9. The method of claim 4 or 5 wherein an innerliner of the tire (12) is removed at a mounting location.

10. The method of claim 4 further comprising the steps of inserting a green rubber patch between the buffed inside surface of the tire (12) and the mounting surface (216) of the device.
